(19) Europäisches Patentamt
European Patent Office
Office européen des brevets

(11) **EP 2 713 627 A1**

(12) **EUROPEAN PATENT APPLICATION**

(43) Date of publication:
02.04.2014 Bulletin 2014/14

(51) Int Cl.:
*H04Q 11/00* (2006.01)    *H04J 14/02* (2006.01)

(21) Application number: 12306184.8

(22) Date of filing: 28.09.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Alcatel Lucent
75007 Paris (FR)

(72) Inventors:
• Simonneau, Christian
94800 Villejuif (FR)
• Pointurier, Yvan
91300 Massy (FR)

(74) Representative: Mildner, Volker et al
Alcatel-Lucent Deutschland AG
Intellectual Property & Standards
Lorenzstrasse 10
70435 Stuttgart (DE)

Remarks:
Amended claims in accordance with Rule 137(2)
EPC.

(54) **Method of transmitting optical data packet signals in an optical wavelength-division multiplexing network**

(57)    A payload time slot of a first optical signal and a simultaneously transmitted payload time slot of a second optical signal have synchronous beginnings at a transmission side. A guard-band time slot of the first optical data packet signal and a simultaneously transmitted guard-band time slot of the second optical data packet signal have synchronous endings at the transmission side. A chromatic dispersion difference affecting the signal s is compensated, by setting the time duration of the payload time slot of the second optical data packet signal and furthermore also the time duration of the successive guard-band time slot of the second optical data packet signal at the transmission side, such that the successive guard band timeslot of the first optical data packet signal and the successive guard band time slot of the second optical data packet signal have at least a pre-defined overlap at a receiving side.

Fig. 1a

Fig. 1b

**Description**

**Field of the invention**

The invention relates to a method, an optical network node and a network management system for transmitting optical data packet signals in an optical wavelength-division multiplexing network.

**Background**

In recent years, a technology dealing with transmitting optical data packets using optical data transmission has arisen.

In an optical wavelength-division multiplexing (WDM) network, multiple optical signals of respective different wavelengths are used for data transmission. When transmitting data using these optical signals as optical data packet signals, each optical data packet signal of a respective wavelength contains a sequence, in which time slots of payload data and empty time slots, called guard-bands, alternate.

Furthermore, optical data packet signals transmitted by the same transmission device transmit the different optical data packet signals, such that simultaneously transmitted payload time slots of different optical data packet signals have usually synchronous beginnings as well as synchronous endings.

Furthermore, the guard-band time slots of the respective optical data packet signals, which succeed the respective payload time slots, and which are transmitted simultaneously, have usually synchronous beginnings and endings at the transmission side.

Thus, when choosing a same duration for the payload time slots of the different optical data packet signals and also choosing a same duration for the succeeding guard-band time slots of the respective optical data packet signals, the respective optical data packet signals are synchronous with respect to each other, in that simultaneously transmitted payload time slots are synchronous and also simultaneously transmitted guard-band time slots are synchronous.

Usually, the duration of the payload time slots is set to a pre-defined or pre-selected same time duration. Also, the guard-band time slots of the different optical data packet signals are usually chosen to a same other time duration value.

Using such a synchronous optical data packet transmission, in which the guard-band time slots of different optical data packet signals overlap, this overlapping of the guard-band time slots allows a proper reception at a receiving side. Such overlapping of the guard-band time slots of the respective optical data packet signals is important, since at a receiving side there may be a coherent receiver used, which for example may attempt to receive during a first payload time slot data via a first optical data packet signal having a first wavelength, and then furthermore attempt to receive during the next following payload time slot data via from optical data packet signal of another wavelength. For such a coherent reception, a tuneable laser providing an optical carrier signal may have to be tuned during the different time slots to the different respective wavelengths of the different optical data packet signals.

Thus, by having an overlap of the guard-band time slots of the different optical data packet signals, it is ensured, that there is an amount of time during which the tuneable laser is allowed to be tuned from one wavelength to another. To have such an amount of time between two following payload time slots is important, since tuning a tuneable laser from one wavelength to another cannot be performed within a non-positive amount of time.

**Summary**

Proposed is a method of transmitting optical data packet signals in an optical wavelength-division multiplexing network. The method comprises different steps.

The first optical data packet signal is transmitted at a first wavelength, while a second optical data packet signal is transmitted at a second wavelength.

The optical data packet signals contain respective sequences of alternating payload time slots and guard-band time slots.

The payload time slot of the first optical data packet signal and a simultaneously transmitted payload time slot of the second optical data packet signal have synchronous beginnings at a transmission side.

A successive guard-band time slot of the first optical data packet signal and a simultaneously transmitted successive guard-band time slot of the second optical data packet signal have synchronous endings at the transmission side.

The successive guard-band time slot of the first optical data packet signal has a first pre-defined time duration.

The method comprises furthermore a step of compensating a difference of a first chromatic dispersion affecting the first optical data packet signal and a second chromatic dispersion affecting the second optical data signal, when transmitting these signals over a pre-determined optical transmission connection to a receiving side.

This compensation is achieved, by setting the time duration of the payload time slot of the second optical data packet signal and furthermore also the time duration of the successive guard-band time slot of the second optical data packet signal at the transmission side, such that the successive guard band timeslot of the first optical data packet signal and the successive guard band time slot of the second optical data packet signal have at least a pre-defined overlap at a receiving side.

In order to grasp the advantages of the proposed method, the following aspects have to be taken into consideration.

By choosing the time duration of the payload time slot of the second optical data packet signal and also the time duration of the successive guard-band time slot of the second optical data packet signal in the proposed manner, it is ensured, that the successive guard band timeslot of the first optical data packet signal and the successive guard band time slot of the second optical data packet signal have at least a minimum pre-defined overlap at a receiving side.

Due to different amounts of chromatic dispersion acting on the different signals of different wavelengths, the two optical data packet signals may be shifted in time to each other. In other words, the reception is carried out at the receiving side after the first optical data packet signal is shifted by a first time delay due to a first amount of chromatic dispersion affecting the first signal during the transmission from the transmitting side to the receiving side, while another the second optical data packet signal is shifted by a second, different time delay due to a second amount of chromatic dispersion affecting the second signal during the transmission from the transmitting side to the receiving side. In other words, different amounts of chromatic dispersion shift the optical data packet signals by different time delays during their transmission from the transmitting through the receiving side.

Thus, although the two optical data packet signals experience a different amount of chromatic dispersion during the transmission to the receiving side via the optical data transmission connection, it is ensured by the proposed method, that at the receiving side, the respective guard-band time slots of the respective optical signals succeeding the respective payload time slots of the respective optical signals overlap at the receiving side for a pre-defined minimum amount of time.

During this pre-defined positive minimum overlap time, there is a time window open, which can be used for example for tuning a laser of a coherent transceiver from one wavelength to the other wavelength. This is of importance, since tuneable lasers cannot be tuned from one wavelength to another within non-positive amount of time, as it has been described previously above.

Even furthermore, to have a such time window at hand, during which the respective guard-band time slots of the respective optical data packet signals overlap, is of advantage, since payload data contained within payload time slots may be dropped at an optical network node using an optical gate, such as for example a semi-conductor amplifier. Such optical gates have to be engaged at an optical node. In other words, the gates have to be open optically for suppressing data during payload time slots, which also requires an overlap of the respective guard-band timeslots of the respective optical signals. This is also ensured by the proposed method.

The method has furthermore the advantage that, when transmitting data from the transmitting side to the receiving side, the overlap of the respective guard-band time slots for the respective optical data packet signals is ensured without having to compensate for an amount of different time delays, also called time shifts, caused by optical chromatic dispersion, using additional delay lines. Thus, the proposed method of transmitting data via optical data packet signals does not require additional hardware components, such as optical delay lines, for compensating different time shifts caused by different optical chromatic dispersions for different wavelengths of the respective optical data packet signals.

**Brief description of the drawings.**

Figure 1a shows a transmission and a reception of different optical data packet signals of different wavelengths according to the prior art.

Figure 1b shows a transmission and a reception of different optical data packet signals of different wavelengths according to an embodiment of the proposed method.

Figure 2 shows an optical network node according to the prior art.

Figure 3 shows an embodiment of a proposed optical network node.

Figure 4 shows a schematic diagram of a proposed network management system for an optical wavelength-division multiplexing network.

**Description of embodiments**

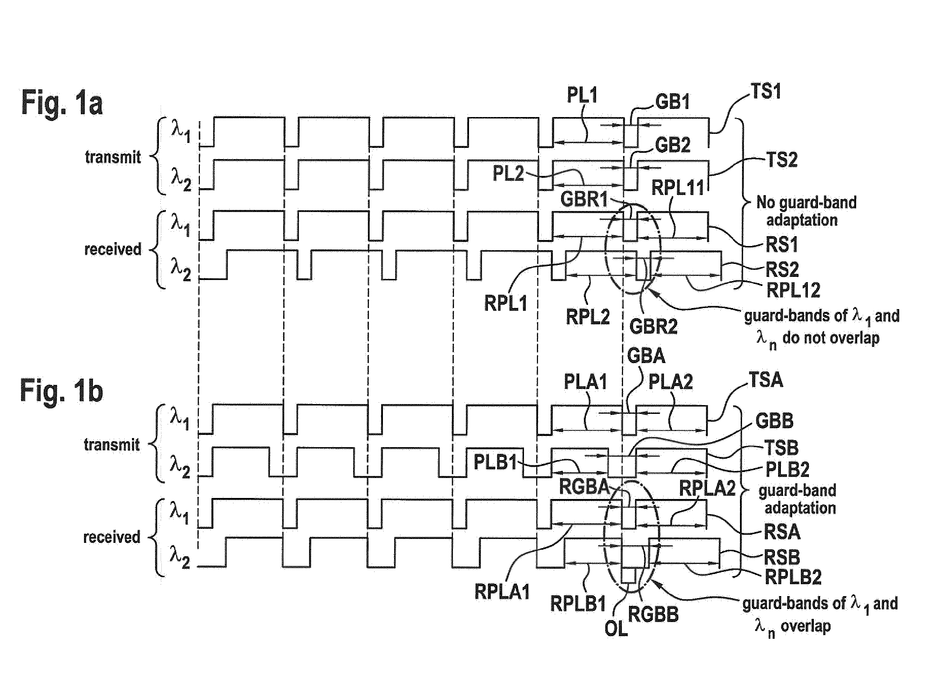

Figure 1a shows two optical data packet signals TS1 and TS2 of respective wavelengths λ1 and λ 2. Each of the signals TS1 and TS2 contains time slots PL of payload data, with alternate with guard-band timeslots GB, during which no data is transmitted.

Both the respective payload time slots PL1 and PL2 of the signals TS1 and TS2 are transmitted simultaneously and have synchronous beginnings at the transmission side. The successive guard-band time slot GB1, succeeding the payload time slot PL1, is transmitted simultaneously to the successive guard-band time slot GB2, which succeeds the payload time slot PL2. Both these guard-band time slots GB1 and GB2 are transmitted simultaneously and have synchronous endings at the transmitting side.

In this solution according to the prior art, the payload timeslots PL1 and PL2 have a same time duration.

**Figure 1a shows furthermore** signals RS1 and RS2, that are received at a receiving side after the transmission of the signals TS1 and TS2 over an optical data transmission connection. An optical transmission connection may contain one or more optical links of optical fibres. Furthermore, an optical transmission connection may also contain optical hardware devices connecting the different optical links.

Due to the fact, that an optical chromatic dispersion for the first wavelength λ 1 may be different compared to the amount of chromatic dispersion affecting the wavelength λ 2 during the transmission via the connection, the two received signals RS1and RS2 may be shifted in time to each other. Preferably, the wavelength λ 2 experiences a greater chromatic dispersion than the wavelength λ 1 along the transmission connection. Thus, the wavelength λ 2 experiences a greater time shift than the wavelength λ 1 along the transmission connection.

As it can be seen on the lower right hand side of Figure 1a, the resulting guard-band time slot GBR1 of the received signal RS1 and the resulting guard-band time slot GBR2 of the received signal RS2 are shifted to each other, such that they do not overlap any more. Due to the mentioned technical restrictions for coherent receivers or optical gates blocking specific payload signals in respective payload slots, it is not favourable that the two guard-band time slots GB1R and GB2R do not overlap. This has been described in detail above.

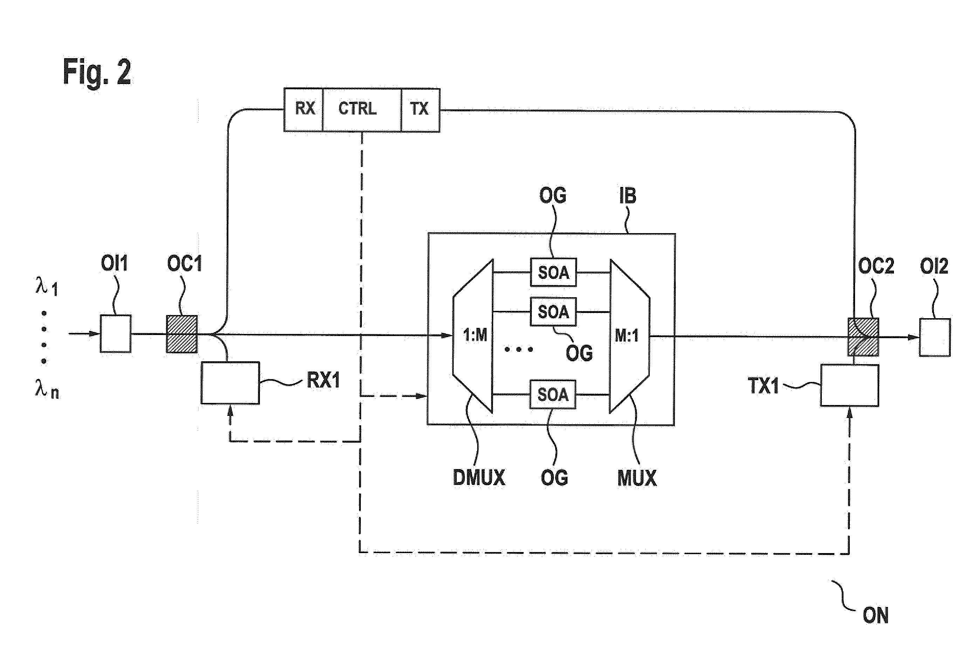

Figure 2 shows and optical network node ON according to the prior art.

The optical network node ON contains an optical interface OI1, at which different wavelengths λ 1,..., λ n may be received. The different optical signals of the different wavelengths are then provided by an optical coupler OC1 to a receiving unit RX1. Furthermore, the optical signals are also provided to at least one integrated block IB.

Furthermore, an optical signal carrying a wavelength λcc, as an optical control channel, may be provided by the optical coupler OC1 to a receiving unit RX, which determines from the optical signal of the wavelength λcc control information and provides this to a control unit CTRL. The control unit CTRL is furthermore coupled to a transmission unit TX, which generates an optical signal of wavelength λcc in dependence on control information generated by the control unit CTRL.

The optical coupler OC1 may contain an optical coupling unit as well as one or more optical de-multiplexing units, thus splitting up the different signals of the different wavelengths λ 1,...,λn onto different branches connected to the optical coupler OC1.

The receiving unit RX1 may contain a tuneable laser, which is tuned to the wavelength, at which data shall be received from one of the optical signals during a specific payload time slot by means of coherent reception. The information, at which point of time, or during which payload time slot, the receiving unit RX 1 should derive data from one of the different signals of the different wavelengths, is provided by the control unit CTRL to the receiving unit RX1. The control unit CTRL derives such information from the data received from the control channel of the wavelength λcc.

At the integrated block IB, the different signals of the different wavelengths λ 1,..., λ n are split up by an optical de-multiplexing unit DMUX onto different optical gates OG. These optical gates OG are preferably semi-conductor optical amplifiers SOA.

In the case, that an optical payload signal should be dropped within a certain specific payload time slot, that optical gate OG, to which the optical signal of the respective wavelength is provided during this payload time slot, is opened in dependence on control information provided by the control unit CTRL. If such a gate OG is closed, it connects optically the two fibers connected to the gate OG.

This dropping of a payload signal during a specific payload time slot at a specific optical signal wavelength has to be performed, in the case that the optical node ON wants to insert a further, other payload signal into this payload time slot at this wavelength, using the transmission unit TX1.

Since the different optical signals, which are provided to the optical gates OG, are combined again at an optical multiplexing unit MUX, and are then furthermore provided to an optical coupler OC2, to which also the transmission unit TX1 is connected, the transmission unit TX1 may generate a payload signal at that wavelength and within that payload time slot, during which the optical gate OG blocked the payload signal at that wavelength.

The transmission unit TX1 in Figure 2 is controlled by control information provided by the control unit CTRL, for controlling, during slot and at which wavelength the transmission unit TX1 inserts payload data at which wavelength.

Furthermore, the optical coupler OC2 combines not only the signals coming from the integrated block IB , as well as the signal from the transmission unit TX1, but also the optical signal of the control channel of the wavelength $\lambda_{cc}$ provided by the transmission unit TX of the control unit CTRL. All of these combined optical signals are then transmitted at the optical interface OI2 into the optical network.

In the case, that such an optical node ON shown in Figure 2 receives optical signals RS1 and RS2 shown in Figure 1a, it would be impossible for the receiving unit RX1 to tune from the wavelength $\lambda2$ within the time slot RPL2 directly to the wavelength $\lambda1$, for receiving payload data during the payload time slot RPL11. Such tuning would require the tuning from the wavelength $\lambda2$ to the wavelength $\lambda1$ during a non-positive amount of time, which is not possible.

One solution for avoiding a non-overlap of the guard-bands GBR1 and GBR2 at the receiving side, would be to split up the optical signals at an intermediate place of the data transmission connection apply a different amount of time delay to the different signals of the different wavelengths. This would require hardware elements realizing such time delays, such as optical delay lines. Installing and controlling the interaction of such hardware delay lines is cumbersome and not cost-effective.

Figure 1b shows a schematic drawing illustrating the proposed method for transmitting optical data packet signals.

The transmitted signal TSA of the wavelength $\lambda1$ is essentially equal to the signal TS1 shown in Figure 1a.

This signal TSA shows payload data at a payload time slot PLA1, followed by a guard-band time slot GBA, and then followed by another payload time slot PLA2.

Furthermore, at a transmitting side, another optical data packet signal TSB is transmitted at a wavelength $\lambda2$.

Resulting received signals RSA and RSB resulting from the transmission of the respective signals TSA and TSB over the optical data transmission connection are also shown.

The signal TSB contains a payload time slot PLB1, which is followed by guard-band time slot GBB, which in turn is followed by another payload timeslot time slot PLB2.

The payload time slots PLA1 and PLB1 are transmitted simultaneously and have synchronous beginnings at the transmitting side.

The guard-band time slot GBA succeeding the payload time slot PLA1 is transmitted simultaneously with the guard-band time slot GBB succeeding the payload time slot PLB1. The guard-band time slots GBA and GBB have synchronous endings at the transmitting side.

The guard-band time slot GBA of the signal TSA has a pre-defined time duration.

The time duration of the payload time slot PLB1 and the time duration of the guard-band time slot of GBB of the signal TSB a set at the transmission side, such that guard band timeslot RGBA of the signal RSA and resulting guard band time slot RGBB of the signal RSB have at least a pre-defined overlap OL at the receiving side.

By choosing the time durations of the payload time slot PLB1 and the guard-band time slot GBB in this manner, it is compensated, that the signal TSA is affected by a different amount of optical chromatic dispersion in comparison to the chromatic dispersion amount affecting the signal TSB. Due to the fact, that the resulting received guard-bands RGBA and RGBB overlap at the receiving side by the overlap OL, proper reception of payload data within successive payload time slots can be ensured, as well as dropping specific payload time slots at an optical node using optical gates.

Such an adaptation of time durations as proposed herein can be carried out for one specific payload time slot PLB1 and one specific guard-band timeslot GBB, when knowing the different amounts of chromatic dispersion that the signals TSA and TSB will experience over the pre-determined optical transmission connection.

Such an adaptation of the time duration for the payload time slot PLB1 and the guard-band time slot GBB may be carried out also for other payload time slots and other respective succeeding guard-band time slots of the signal TSB under the assumption, that the pre-determined optical transmission connection is an optical transmission connection of maximum length experienced by any of the guard-band time slot signals of the signal TSB. Therefore, it is ensured, that all payload data of all payload time slots may be decoded at a receiving end for directly successive payload time slots of different wavelengths using only one tuneable laser at a receiving unit.

Preferably, the time durations for all payload timeslots of the signal TSB are chosen to a same value and also the time durations for the guard-band time slots of the signal TSB are chosen to a same further value. This ensures a proper reception of the payload time slots preceding these guard-band time slots, in the case of a maximum chromatic dispersion difference between the signals TSA and TSB. Such a solution would be feasible in the case, that the signals TSA and TSB are transmitted within an optical packet ring network, and in which each payload data of each payload time slot would maximally be transmitted once around the circumference of the optical packet ring network. Thus, when knowing the optical link length of the optical ring network as well as the one or more optical fibre types included in the transmission connection forming this optical ring network, the maximal difference between the optical chromatic dispersion affecting the signal TSA of the wavelength $\lambda1$ and the optical chromatic dispersion affecting the signal TSB of the wavelength $\lambda2$ can be determined. From this chromatic dispersion difference, the amount of time duration for the payload time slots of the signal TSB and also the amount of time duration for the guard-band time slots of the signal TSB can be chosen in dependence on the determined chromatic dispersion difference.

Preferably, in the solution for an optical packet ring network, the respective time durations of multiple consecutive guard-band time slots of the signal TSB will be set to the time duration of the guard-band time slot GBB, while the respective time durations of multiple consecutive payload time slots of the signal TSB will be set to the time duration of the payload time slot PLB1.

The data transmission carried out within the payload time slots of the signals TSA and TSB may be carried out, by using same or different modulation formats for the respective signals TSA and TSB.

Furthermore, an adaptation of time durations for a payload time slots and time durations of guard-band time slots may not only be carried out for the signal TSB with regard to the signal TSA, but even for further optical data packet signals of other wavelengths.

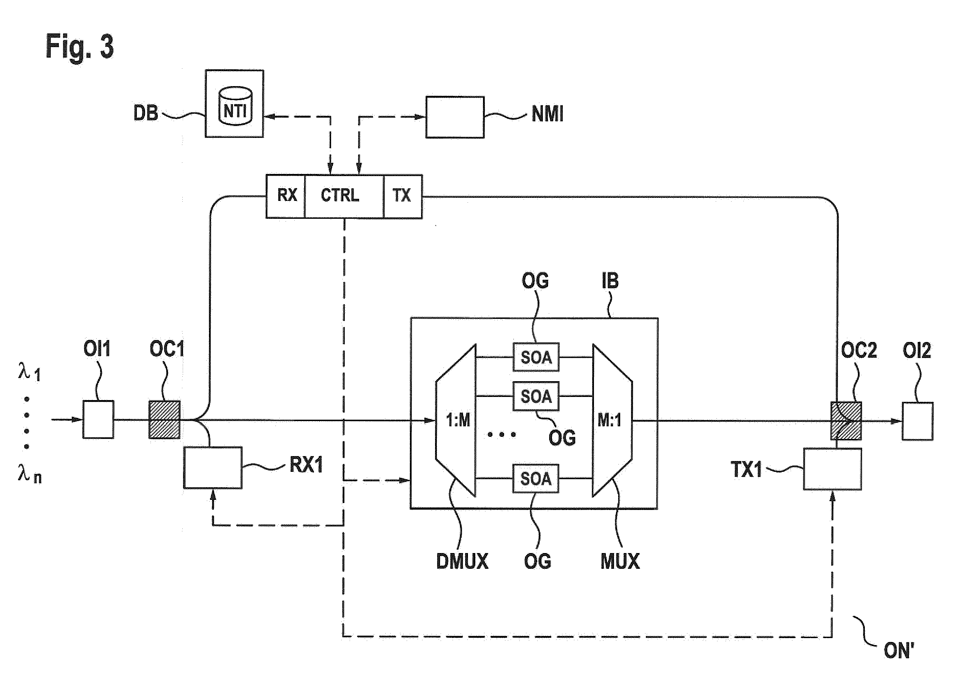

Figure 3 shows an optical node ON'. The node ON' is essentially similar to the node ON shown and described previously with regard to Figure 2.

In addition to the elements already described with regard to the node ON of Figure 2, the node ON' shown in Figure 3 contains furthermore a network management interface NMI, via which the node ON' is able to receive data information from a network management.

Preferably, the node ON' furthermore contains a database DB, for providing network topology information NTI. Preferably, the control unit CTRL is connected to the network management via the interface NMI, as well as to the database system DB.

Even more preferably, more than one control unit CTRL is comprised within the node ON' for generating control information, via which the control unit CTRL controls the receiving unit RX1 and the transmission unit TX1.

In a preferred embodiment, the node ON' receives via the network management interface NMI data information from the network management. This data information indicates a time duration for the guard-band time slot GBB shown in Figure 1b and a time duration for the payload time slot PLB1. The control unit CTRL sets the time duration of the guard-band time slot GBB and the time duration of the payload time slot PLB1 for the optical signal TSB shown in Figure 1b in dependence on this received data information. In this embodiment, the network management determines the time durations for these time slots and instructs the node ON' to use specific time durations.

In another embodiment, a determination of the time duration of the payload time slot PLB1 and the time duration of the guard-band time slot GBB shown in Figure 1b is determined by the node ON' itself. For this, the node ON' preferably contains a database system DB providing the network topology information NTI. The database system DB may be at least one memory unit and/or one or more processing units.

The database system DB provides network topology information NTI of the optical WDM network. This network topology information comprises data information, which indicates types of optical link fibres present within the optical WDM network. Furthermore, the network node ON' receives data information, which indicates that receiving side, to which an optical payload should be transmitted within an optical payload time slot. In the given example, payload is transmitted within the payload time slot PLB1 shown in Figure 1b. Such data information indicating the receiving side may be received either via the network management interface NMI or via the control channel of the wavelength $\lambda_{cc}$.

The node ON' itself determines the time duration for the payload time slot PLB1 and the time duration of the guard-band timeslot GBB shown in Figure 1b for the signal TSB. For this, the node ON' uses knowledge of the wavelength $\lambda 1$, the wavelength $\lambda 2$, the network topology information NTI and the data information that indicates the receiving side. From such information, it is possible to derive the different amounts of chromatic dispersion, which will act on the different optical signals. Thus it is also possible, to derive the amount of difference of a time shift caused by the respective chromatic dispersions onto the different optical data packet signals.

Information, which indicates the respective chromatic dispersions affecting the different wavelengths along the optical transmission connection from the node ON' of Figure 3 to a receiving node, may be provided either within the network topology information NTI or by means of further data. Such further data provides a specification of optical link fibres present within the optical network.

The optical link data may be provided by a further database or memory elements not shown explicitly in the Figure 3. To give a concrete example, one may consider a time duration of the guard-band GBA shown in Figure 1b as 100 nanoseconds. Assuming, that the wavelengths $\lambda 1$ and $\lambda 2$ are 6 nanometres apart, which may be for instance the first and last channel of the comb used in an optical data packet transmission network, a typical value for a single mode fibre would be to cause a chromatic dispersion of 17 picoseconds / nanometre / kilometre. In the case, that a transmission via such a single mode fibre is performed over a distance of 100 kilometres from the transmitting node to the receiving node, one may derive the different chromatic dispersions as follows. The chromatic dispersion of the wavelength $\lambda 2$ with regard to the wavelength $\lambda 1$ is equal to

$$1200 \text{ kilometres x } 6 \text{ nanometres x } 17 \text{ picoseconds/nanometre / kilometres}$$

**[0070]** , which in turn is equal to 122.4 nanoseconds. Such a time shift of 122.4 nanoseconds causes the received guard band time slots not to overlap at all. A pre-determined minimum overlap of the guard band time slots may be chosen to a value of 50 nanoseconds. Thus, the guard-band GBB shown in Figure 1b would be chosen to have a time duration of

100 nanoseconds (initial length) +22.4 nanoseconds + 50 nanoseconds  = 172.4 nanoseconds.

In other words, by considering the time duration of the guard-band GBA shown in Figure 1a and determining the time shift between the signals TSA and TSB of the wavelengths $\lambda1$ and $\lambda2$ at the receiving side of the data transmission connection, which is caused by the chromatic dispersion difference over optical data transmission using optical fibres, as well as a pre-defined minimum overlap of the guard-band time slots, one determines the time duration of the guard-band time slot GBB.

The time-duration of the time slot PLB1 is then chosen by subtracting from a given payload time duration time slot of the slot PLA1 that amount of time duration, by which the guard band time slot GBB is increased with respect to the guard band time slot GBA.

Preferably, an adaption of the time slots PLB1 and GBB is only carried out, in the case that the resulting time slots RGBA and RGBB overlap by less that the pre-defined minimum overlap.

In an example of choosing the time duration of the guard band slot GBB to 172.4 nanoseconds, and in which data is transmitted in the signal TSA at 10 GBit/s, the payload time slot PLA1 contains 724 bits within the section, by which is does not overlap with the payload time slot PLB1. This second has a duaration of 72.4 nanoseconds.

In the case, when attempting to provide same exact data rates via the signals TSA and TSB with same modulation schemes, these 724 bits of the signal TSA are set as dummy bits.

When using the proposed method in an optical packet ring network for adapting the time duration of guard-band time slots, it has to be ensured, that the overall duration of a payload time slot and a preceding guard-band time slot together as a whole number multiple are equal to the overall time, which an optical signal takes to be transmitted once around the circumference of an optical ring network.

Preferably, the transmitting node ON' of Figure 3 indicates the time duration of the payload time slot PLB1 and the time-duration of the guard-band time slot GBB shown in Figure 1b to a receiving side, using preferably the optical control channel of the wavelength $\lambda$cc.

Proposed is furthermore an optical node as shown in Figure 2, with an additional modification, in which the optical node is operable to receive via the control channel of the wavelength $\lambda$cc data information, which indicates the time duration of a guard-band time slot, such as the guard-band time slot GBB of Figure 1b, and which indicates the duration of a payload time slot, such as the payload time slot PLB1 of Figure 1b. The node is furthermore operable to control by means of a control unit CTRL the reception unit RX1.

What is furthermore proposed, is an optical network node according to the Figure 3, which contains at least a network management interface NMI, while it contains only preferably a database system DB. This node is furthermore operable to receive via the network management interface NMI data information indicating the time duration of a payload time slot and the time duration of a guard-band time slot, such as the payload time slot PLB1 and the guard-band time slot GBB in Figure 1b. Furthermore, such a network node is operable to control a reception of data that the wavelength $\lambda2$, by properly instructing the unit RX1.

According to the above referred embodiment, the transmitting node ON' of Figure 3 indicates to the receiving side a transmission distance of the data transmission connection as well as at least one link fibre type that is part of the optical data transmission connection. From such information, a receiving node may derive a chromatic dispersion difference as well as a time shift for two wavelengths itself.

Furthermore, the node ON' preferably transmits towards a receiving node data information, which indicates an amount of data, which is transmitted within a payload time slot. When assuming a constant data rate, the receiving side may then derive from such an indicated amount of data a time duration of a payload time slot.

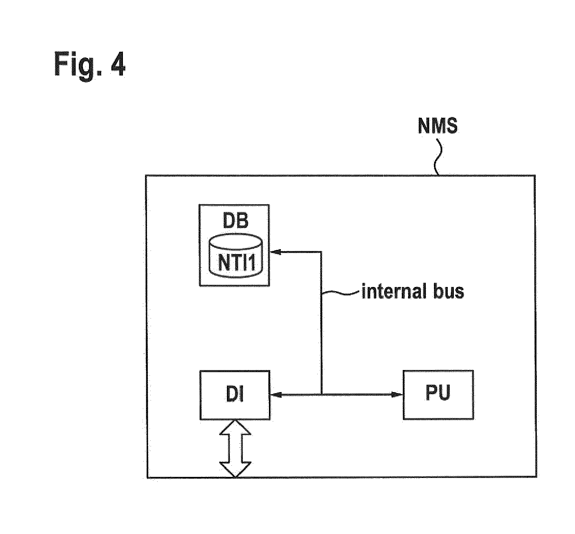

What is furthermore proposed, is a network management system for an optical WDM network. Such a network management system NMS is shown in Figure 4. The network management NMS system contains at least one database system DB1, which provides network topology information NTI1 of the optical WDM network. This network topology information NTI1 comprises data information, which indicates types of optical link fibres present within the network.

Via a data interface DI, the network management system NMS may receive data information, which indicates a transmitting node, a receiving node, as well as two different wavelengths that should be used for data transmission. Furthermore, the network management system NMS provides a time duration of a payload time slot, such as the slot PLA1 shown in Figure 1b, and a time duration of a guard-band time slot, such as the slot GBA shown in Figure 1b. Using a processing unit PU, the network management system NMS determines the time duration of the payload time slot PLB1 and the time duration of the guard-band time slot GBB shown in Figure 1b. For this, the processing unit uses knowledge of the first wavelength λ1, the second wavelength λ2 the network topology information NTI and that data information, which indicates the transmitting node and the receiving node.

Furthermore, the network management system NMS transmits the data interface DI or another data interface to the transmitting and/or the receiving side data information, that indicates the time duration for the payload time slot PLB1 ad the time duration for the guard-band time slot GBB.

**Claims**

1. Method of transmitting optical data packet signals in an optical wavelength division multiplexing (WDM) network, comprising

   - transmitting a first optical data packet signal (TSA) at a first wavelength (λ1) and a second optical data packet signal (TSB) at a second wavelength (λ2),

   wherein said optical data packet signals (TSA, TSB) contain respective sequences of alternating payload time slots (PLA1, PLA2, PLB1, PLB2) and guard band time slots (GBA, GBB),
   wherein a payload time slot (PLA1) of said first optical data packet signal (TSA) and a simultaneously transmitted payload time slot (PLB1) of said second optical data packet (TSB) signal have synchronous beginnings at a transmitting side,
   wherein a successive guard band time slot (GBA) of said first optical data packet signal (TSA) and a simultaneously transmitted successive guard band time slot (GBB) of said second optical data packet (TSB) signal have synchronous endings at a transmitting side,
   wherein said successive guard band time slot (GBA) of said first optical data packet signal (TSA) has a first predefined time duration,
   furthermore comprising compensating a chromatic dispersion difference acting on said first and said second optical data signal (TSA, TSB) when transmitting said signals over a predetermined optical transmission connection to a receiving side,

   - by setting the time duration of said payload time slot (PLB1) of said second optical data packet signal (TSB) and furthermore also setting the time duration of said successive guard-band time slot (GBB) of said second optical data packet signal (TSB) at the transmission side, such that the resulting successive guard band timeslot (RGBA) of said first optical data packet signal (RSA) and the resulting successive guard band time slot (RGBB) of said second optical data packet signal (RSB) have at least a pre-defined overlap at said receiving side.

2. Method according to claim 1,
   comprising furthermore, at said transmitting side,

   - receiving data information indicating said time duration of said payload time slot and said time duration of said successive guard band time slot for said second optical data packet signal,
   - and setting said time duration of said payload time slot and said time duration of said successive guard band time slot for said second optical data packet signal in dependence on said data information.

3. Method according to claim 1,
   comprising furthermore, at said transmitting side,

   - providing network topology information of said optical WDM network, wherein said network topology information comprises data information indicating types of optical link fibers present within said optical WDM network,
   - receiving data information indicating said receiving side within said optical WDM network,
   - determining said time duration of said payload time slot and said time duration of said successive guard band time slot for said second optical data packet signal, using said first wavelength, said second wavelength, said network topology information and said data information indicating said receiving side.

4. Method according to claim 3,
   comprising furthermore, at said transmitting side,

   - transmitting data information indicating said time duration of said payload time slot and said time duration of said successive guard band time slot for said second optical data packet signal towards said receiving side.

5. Method according to claim 4,
   comprising furthermore, at said transmitting side,

   - transmitting said data information indicating said time duration of said payload time slot and said time duration of said successive guard band time slot for said second optical data packet, using an optical control channel signal.

6. Method according to claim 3,
   comprising furthermore, at said transmitting side,

   - transmitting towards said receiving side data information indicating at least one link fiber and a transmission distance.

7. Method according to claim 4 or 6,
   comprising furthermore, at said transmitting side,

   - transmitting towards said receiving side data information indicating an amount of data transmitted within said payload time slot of said second optical data packet signal.

8. Method according to claim 3,
   comprising furthermore, at said transmitting side,

   - determining said time duration of said payload time slot and said time duration of said successive guard band time slot for said second optical data packet, using furthermore data information indicating respective chromatic dispersions affecting said wavelengths on said optical transmission connection, wherein said data information indicating said chromatic dispersions is provided either via said network topology information or via further optical link fiber data.

9. Method according to claim 1,
   comprising furthermore, at said transmitting side,

   - setting respective time durations of multiple consecutive payload time slot of said second optical data packet signal to said time duration of said payload time slot of said second optical data packet signal,
   - and setting respective time durations of multiple consecutive guard band time slot of said second optical data packet signal to said time duration of said successive guard band time slot of said second optical data packet signal.

10. Method according to claim 4
    comprising furthermore, at said transmitting side,

    - transmitting within said payload time slot of said first optical data packet signal an amount of dummy data which corresponds to a time duration difference between said payload time slot of said first optical data packet signal and said payload time slot of said second optical data packet signal

11. Optical Network Node for an optical wavelength division multiplexing (WDM) network, operable to

    - transmit a first optical data packet signal (TSA) at a first wavelength ($\lambda$1) and a second optical data packet signal (TSB) at a second wavelength ($\lambda$2),

    wherein said optical data packet signals (TSA, TSB) contain respective sequences of alternating payload time slots (PLA1, PLA2, PLB1, PLB2) and guard band time slots (GBA, GBB),
    wherein a payload time slot (PLA1) of said first optical data packet signal (TSA) and a simultaneously transmitted payload time slot (PLB1) of said second optical data packet (TSB) signal have synchronous beginnings,
    wherein a successive guard band time slot (GBA) of said first optical data packet signal (TSA) and a simultaneously transmitted successive guard band time slot (GBB) of said second optical data packet signal (TSB) have synchronous endings,

furthermore operable to set a time duration of said successive guard band time slot (GBA) of said first optical data packet signal (TSA) to a first predefined time duration,

furthermore operable to compensate a chromatic dispersion difference acting on said first and said second optical data signal (TSA, TSB) when transmitting said signals over a predetermined optical transmission connection to a receiving side,

- by setting the time duration of said payload time slot (PLB1) of said second optical data packet signal and furthermore also setting the time duration of said successive guard-band time slot (GBB) of said second optical data packet signal at the transmission side, such that the resulting successive guard band timeslot (RGBA) of said first optical data packet signal and the resulting successive guard band time slot (RGBB) of said second optical data packet signal have at least a pre-defined overlap at said receiving side.

**12.** Optical Network Node according to claim 11,
furthermore operable to

- receive data information indicating said time duration of said payload time slot and said time duration of said successive guard band time slot for said second optical data packet signal,
- and set said time duration of said payload time slot and said time duration of said successive guard band time slot for said second optical data packet signal in dependence on said data information.

**13.** Optical Network Node according to claim 11,
furthermore operable to

- provide network topology information of said optical WDM network, wherein said network topology information comprises data information indicating types of optical link fibers present within said optical WDM network,
- receive data information indicating said receiving side within said optical WDM network,
- and determine said time duration of said payload time slot and said time duration of said successive guard band time slot for said second optical data packet signal, using said first wavelength, said second wavelength, said network topology information and said data information indicating said receiving side.

**14.** Network Management System for an optical wavelength division multiplexing (WDM) network, operable to

- provide network topology information of an optical WDM network, wherein said network topology information comprises data information indicating types of optical link fibers present within said optical WDM network,
- receive data information indicating a transmitting side, a receiving side, a first wavelength and a second wavelength,
- provide a time duration of a first payload time slot of a first optical data packet signal having a first wavelength,
- provide a time duration of a first guard band time slot of said first optical data packet signal,
- determine a time duration of a second guard band time slot of a second optical data packet signal having a second wavelength and also a time duration of a second payload time slot of said second optical data packet signal, using said first wavelength, said second wavelength, said network topology information and said data information indicating said transmitting side and said receiving side,
- and transmit to said transmitting side data information indicating the determined time durations.

**Amended claims in accordance with Rule 137(2) EPC.**

**1.** Method of transmitting optical data packet signals in an optical wavelength division multiplexing (WDM) network, comprising

- transmitting a first optical data packet signal (TSA) at a first wavelength ($\lambda$1) and a second optical data packet signal (TSB) at a second wavelength ($\lambda$2),
wherein said optical data packet signals (TSA, TSB) contain respective sequences of alternating payload time slots (PLA1, PLA2, PLB1, PLB2) and guard band time slots (GBA, GBB),
wherein a payload time slot (PLA1) of said first optical data packet signal (TSA) and a simultaneously transmitted payload time slot (PLB1) of said second optical data packet (TSB) signals have synchronous beginnings at a transmitting side,
wherein a successive guard band time slot (GBA) of said first optical data packet signal (TSA) and a simultaneously transmitted successive guard band time slot (GBB) of said second optical data packet (TSB) signal have synchronous endings at a transmitting side,

wherein said successive guard band time slot (GBA) of said first optical data packet signal (TSA) has a first predefined time duration,

furthermore comprising compensating a chromatic dispersion difference acting on said first and said second optical data signal (TSA, TSB) when transmitting said signals over a predetermined optical transmission connection to a receiving side,

**characterized in that** the step of compensating said chromatic dispersion difference when transmitting said optical data signals signals over a predetermined optical transmission connection to a receiving side is carried out,

- by setting the time duration of said payload time slot (PLB1) of said second optical data packet signal (TSB) and furthermore also setting the time duration of said successive guard-band time slot (GBB) of said second optical data packet signal (TSB) at the transmission side, such that the resulting successive guard band timeslot (RGBA) of said first optical data packet signal (RSA) and the resulting successive guard band time slot (RGBB) of said second optical data packet signal (RSB) have at least a pre-defined overlap at said receiving side.

**2.** Method according to claim 1,
comprising furthermore, at said transmitting side,

- receiving data information indicating said time duration of said payload time slot and said time duration of said successive guard band time slot for said second optical data packet signal,
- and setting said time duration of said payload time slot and said time duration of said successive guard band time slot for said second optical data packet signal in dependence on said data information.

**3.** Method according to claim 1,
comprising furthermore, at said transmitting side,

- providing network topology information of said optical WDM network, wherein said network topology information comprises data information indicating types of optical link fibers present within said optical WDM network,
- receiving data information indicating said receiving side within said optical WDM network,
- determining said time duration of said payload time slot and said time duration of said successive guard band time slot for said second optical data packet signal, using said first wavelength, said second wavelength, said network topology information and said data information indicating said receiving side.

**4.** Method according to claim 3,
comprising furthermore, at said transmitting side,

- transmitting data information indicating said time duration of said payload time slot and said time duration of said successive guard band time slot for said second optical data packet signal towards said receiving side.

**5.** Method according to claim 4,
comprising furthermore, at said transmitting side,

- transmitting said data information indicating said time duration of said payload time slot and said time duration of said successive guard band time slot for said second optical data packet, using an optical control channel signal.

**6.** Method according to claim 3,
comprising furthermore, at said transmitting side,

- transmitting towards said receiving side data information indicating at least one link fiber and a transmission distance.

**7.** Method according to claim 4 or 6,
comprising furthermore, at said transmitting side,

- transmitting towards said receiving side data information indicating an amount of data transmitted within said payload time slot of said second optical data packet signal.

**8.** Method according to claim 3,
comprising furthermore, at said transmitting side,

- determining said time duration of said payload time slot and said time duration of said successive guard band time slot for said second optical data packet, using furthermore data information indicating respective chromatic dispersions affecting said wavelengths on said optical transmission connection, wherein said data information indicating said chromatic dispersions is provided either via said network topology information or via further optical link fiber data.

**9.** Method according to claim 1,
comprising furthermore, at said transmitting side,

- setting respective time durations of multiple consecutive payload time slot of said second optical data packet signal to said time duration of said payload time slot of said second optical data packet signal,
- and setting respective time durations of multiple consecutive guard band time slot of said second optical data packet signal to said time duration of said successive guard band time slot of said second optical data packet signal.

**10.** Method according to claim 4
comprising furthermore, at said transmitting side,

transmitting within said payload time slot of said first optical data packet signal an amount of dummy data which corresponds to a time duration difference between said payload time slot of said first optical data packet signal and said payload time slot of said second optical data packet signal

**11.** Optical Network Node for an optical wavelength division multiplexing (WDM) network, operable to

- transmit a first optical data packet signal (TSA) at a first wavelength ($\lambda$1) and a second optical data packet signal (TSB) at a second wavelength ($\lambda$2),
wherein said optical data packet signals (TSA, TSB) contain respective sequences of alternating payload time slots (PLA1, PLA2, PLB1, PLB2) and guard band time slots (GBA, GBB),
wherein a payload time slot (PLA1) of said first optical data packet signal (TSA) and a simultaneously transmitted payload time slot (PLB1) of said second optical data packet (TSB) signal have synchronous beginnings,
wherein a successive guard band time slot (GBA) of said first optical data packet signal (TSA) and a simultaneously transmitted successive guard band time slot (GBB) of said second optical data packet signal (TSB) have synchronous endings,
furthermore operable to set a time duration of said successive guard band time slot (GBA) of said first optical data packet signal (TSA) to a first predefined time duration,
**characterized in** that said Optical Network Node is furthermore operable to compensate a chromatic dispersion difference acting on said first and said second optical data signal (TSA, TSB) when transmitting said signals over a predetermined optical transmission connection to a receiving side,
- by setting the time duration of said payload time slot (PLB1) of said second optical data packet signal and furthermore also setting the time duration of said successive guard-band time slot (GBB) of said second optical data packet signal at the transmission side, such that the resulting successive guard band timeslot (RGBA) of said first optical data packet signal and the resulting successive guard band time slot (RGBB) of said second optical data packet signal have at least a pre-defined overlap at said receiving side.

**12.** Optical Network Node according to claim 11,
furthermore operable to

receive data information indicating said time duration of said payload time slot and said time duration of said successive guard band time slot for said second optical data packet signal,
- and set said time duration of said payload time slot and said time duration of said successive guard band time slot for said second optical data packet signal in dependence on said data Information.

**13.** Optical Network Node according to claim 11,
furthermore operable to

- provide network topology information of said optical WDM network, wherein said network topology information comprises data information indicating types of optical link fibers present within said optical WDM network,
- receive data information Indicating said receiving side within said optical WDM network,
- and determine said time duration of said payload time slot and said time duration of said successive guard band time slot for said second optical data packet signal, using said first wavelength, said second wavelength, said network topology Information and said data information Indicating said receiving side.

14. Network Management System for an optical wavelength division multiplexing (WDM) network, operable to

- provide network topology information of an optical WDM network, wherein said network topology Information comprises data Information indicating types of optical link fibers present within said optical WDM network,
- receive data information indicating a transmitting side, a receiving side, a first wavelength and a second wavelength,
- provide a time duration of a first payload time slot of a first optical data packet signal having a first wavelength,
- provide a time duration of a first guard band time slot of said first optical data packet signal,
- determine a time duration of a second guard band time slot of a second optical data packet signal having a second wavelength and also a time duration of a second payload time slot of said second optical data packet signal, using said first wavelength, said second wavelength, said network topology information and said data information indicating said transmitting side and said receiving side,
- and transmit to said transmitting side data information indicating the determined time durations.

# Fig. 1a

PL1  GB1  TS1

transmit

λ₁

GB2

λ₂  PL2  TS2

GBR1  RPL11

No guard-band adaptation

received

λ₁  RS1

λ₂  RS2

RPL12

RPL1  RPL2  GBR2

guard-bands of λ₁ and λₙ do not overlap

GBA

# Fig. 1b

PLA1  PLA2  TSA

transmit

λ₁  GBB

PLB1  TSB

λ₂  PLB2

RGBA  RPLA2

guard-band adaptation

received

λ₁  RSA

λ₂  RSB

RPLB2

RPLA1  RPLB1  RGBB

OL

guard-bands of λ₁ and λₙ overlap

EP 2 713 627 A1

14

Fig. 2

Fig. 3

# Fig. 4

NMS

DB

NTI1

internal bus

DI ⟷ PU

Europäisches
Patentamt

European
Patent Office

Office européen
des brevets

**EUROPEAN SEARCH REPORT**

Application Number

EP 12 30 6184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAZOVSKY L G ET AL: "A summary of the hornet project: a next-generation metropolitan area network", IEEE JOURNAL ON SELECTED AREAS IN COMMUNICATIONS, IEEE SERVICE CENTER, PISCATAWAY, US, vol. 21, no. 9, 1 November 2003 (2003-11-01), pages 1478-1494, XP011103043, ISSN: 0733-8716, DOI: 10.1109/JSAC.2003.818838 * page 1478, right-hand column, paragraph 3 - page 1479, left-hand column, paragraph 3; figure 1 * * page 1480, right-hand column, paragraph 5 - page 1483, right-hand column, paragraph 2; figures 6,7 * * page 1486, right-hand column, paragraph 2 - page 1491, left-hand column, paragraph 2; figures 17,18,20,21,22,27,28 * ----- | 1-14 | INV. H04Q11/00 H04J14/02 |
| A | YUANG M ET AL: "HOPSMAN: An Experimental Testbed System for a 10-Gb/s Optical Packet-Switched WDM Metro Ring Network", IEEE COMMUNICATIONS MAGAZINE, IEEE SERVICE CENTER, PISCATAWAY, US, vol. 46, no. 7, 1 July 2008 (2008-07-01), pages 158-166, XP011229495, ISSN: 0163-6804, DOI: 10.1109/MCOM.2008.4557060 * page 158, left-hand column, paragraph 1 - page 159, right-hand column, paragraph 4; figure 1 * * page 160, right-hand column, paragraph 3 * * page 161, left-hand column, paragraph 3 - page 163, right-hand column, paragraph 2; figures 3,4 * ----- | 1-14 | TECHNICAL FIELDS SEARCHED (IPC) H04Q H04J |

-/--

The present search report has been drawn up for all claims

| Place of search | Date of completion of the search | Examiner |
|---|---|---|
| The Hague | 11 February 2013 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 12 30 6184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 95/26592 A2 (BRITISH TELECOMM [GB]; HILL ALAN MICHAEL [GB]) 5 October 1995 (1995-10-05) * page 1, line 4 - line 6 * * page 2, line 20 - page 3, line 28 * * page 7, line 32 - page 9, line 34 * | 1-14 | |
| A | US 2005/147411 A1 (HAMOU CLAUDE [US] ET AL) 7 July 2005 (2005-07-07) * paragraph [0009] * * paragraph [0011] - paragraph [0018] * * paragraph [0033] - paragraph [0041]; figures 1,2,3,4 * | 1-14 | |
| A | BOGDAN HOANCA ET AL: "All-Optical Routing Using Wavelength Recognizing Switches", JOURNAL OF LIGHTWAVE TECHNOLOGY, IEEE SERVICE CENTER, NEW YORK, NY, US, vol. 16, no. 12, 1 December 1998 (1998-12-01), XP011029280, ISSN: 0733-8724 * page 2246, left-hand column, paragraph 4 - right-hand column, paragraph 3; figure 6 * * page 2248, right-hand column, paragraph 3 - page 2249, left-hand column, paragraph 3 * | 1-14 | TECHNICAL FIELDS SEARCHED (IPC) |

The present search report has been drawn up for all claims

| Place of search | Date of completion of the search | Examiner |
|---|---|---|
| The Hague | 11 February 2013 | Roldán Andrade, J |

EPO FORM 1503 03.82 (P04C01)

**EP 2 713 627 A1**

**ANNEX TO THE EUROPEAN SEARCH REPORT**
**ON EUROPEAN PATENT APPLICATION NO.**

EP 12 30 6184

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2013

| Patent document cited in search report | | Publication date | Patent family member(s) | | Publication date |
|---|---|---|---|---|---|
| WO 9526592 | A2 | 05-10-1995 | AU | 701959 B2 | 11-02-1999 |
| | | | AU | 2079495 A | 17-10-1995 |
| | | | CA | 2185138 A1 | 05-10-1995 |
| | | | CN | 1147327 A | 09-04-1997 |
| | | | DE | 69519290 D1 | 07-12-2000 |
| | | | DE | 69519290 T2 | 23-05-2001 |
| | | | EP | 0753222 A1 | 15-01-1997 |
| | | | JP | 4064450 B2 | 19-03-2008 |
| | | | JP | H09511627 A | 18-11-1997 |
| | | | NZ | 282871 A | 29-01-1997 |
| | | | US | 5963350 A | 05-10-1999 |
| | | | WO | 9526592 A2 | 05-10-1995 |
| US 2005147411 | A1 | 07-07-2005 | EP | 1856826 A2 | 21-11-2007 |
| | | | KR | 20080009057 A | 24-01-2008 |
| | | | US | 2005147411 A1 | 07-07-2005 |
| | | | WO | 2006086120 A2 | 17-08-2006 |

EPO FORM P0459

For more details about this annex : see Official Journal of the European Patent Office, No. 12/82

20